# EUROPÄISCHE PATENTANMELDUNG

(11) **EP 4 300 449 A1**
(43) Veröffentlichungstag der Anmeldung: **03.01.2024**
(21) Anmeldenummer: 23178997.5
(22) Anmeldetag: 13.06.2023
(51) Int. Cl.: G07C 9/10, G09F 9/30

(54) **SYSTEM ZUR PERSONENFLUSSSTEUERUNG**

(30) Priorität: 20.06.2022 DE 102022115279
(71) Anmelder: MÜHLBAUER GMBH & CO. KG, 93426 Roding (DE)
(72) Erfinder: BERGMANN, Mike, 01069 Dresden (DE)
(74) Vertreter: Platzöder, Michael Christian

(57) **Zusammenfassung**

Ein System zur Personenflusssteuerung weist auf: eine Passagesteuerungseinrichtung mit zumindest einem beweglichen physischen Personenflussführungselement zum Steuern einer Bewegung zumindest einer Person durch einen durch das System definierten Passagebereich, wobei das bzw. jedes Personenflussführungselement eine teiltransparente Projektionsfläche zur Darstellung einer darauf optisch projizierbaren Abbildung aufweist und die Passagesteuerungseinrichtung zwischen zumindest zwei verschiedenen Konfigurationen überführbar ist, die sich bezüglich einer Position und/oder Orientierung des bzw. jedes Personenflussführungselements und bezüglich der dadurch bedingten Passagemöglichkeit für Personen unterscheiden; (ii) eine Steuerung, die konfiguriert ist, die Passagesteuerungseinrichtung in Abhängigkeit von zumindest einer erfassten Information bezüglich der zumindest einen Person, deren Bewegung durch den Passagebereich zu steuern ist, zu veranlassen, eine entsprechend zugeordnete Konfiguration der Passagesteuerungseinrichtung einzunehmen; und (iii) eine Projektionseinrichtung zum Erzeugen einer Abbildung einer, insbesondere der jeweils aktuell eingenommenen Konfiguration der Passagesteuerungseinrichtung zugeordneten, Hinweisinformation mittels optischer Projektion auf die jeweilige Projektionsfläche des bzw. jedes Personenflussführungselements.

## Beschreibung

Die vorliegende Erfindung betrifft ein System zur Personenflusssteuerung, insbesondere eine Personenschleuse oder eine Abfertigungsgate.

Bekannte Systeme zur Personenflusssteuerung werden insbesondere dazu eingesetzt, Zugangskontrollen zu zugangsbeschränkten Räumen oder Flächen zu implementieren, beispielsweise im Rahmen von Zugangskontrollen für ticketpflichtige Bereiche, wie etwa Veranstaltungsgelände oder Bahnsteige, oder für Sicherheitsbereiche von Flughäfen, Industrie- oder Kraftwerksanlagen oder Forschungslabors u.a.. Ein wesentlicher Aspekt vieler solcher Systeme, insbesondere von automatisierten Personenschleusen, ist die Vereinzelung, d.h. die Überwachung und Sicherstellung dahingehend, dass nur jeweils eine Person gleichzeitig in dem System abgefertigt wird und sich nicht eine oder mehrere weitere Personen unberechtigt zusammen mit der ersten Person Durchgang durch da System verschafft bzw. verschaffen (Personenvereinzelungsüberwachung). In vielen Fällen weisen daher Systeme zur Personenflusssteuerung, insbesondere Personenschleusen, einen abgegrenzten, insbesondere abschließbaren, Raumbereich (Passagebereich) auf, in dem die Abfertigung, insbesondere Authentifizierung oder sonstige Kontrolle, einer abzufertigenden Person erfolgt. Der Raumbereich kann insbesondere mittels einer oder mehreren, insbesondere mittels zwei Türen oder Türenpaaren abschließbar sein, wobei in der Regel eine Tür bzw. ein Türenpaar als abschließbarer Zugang und eine weitere Tür bzw. ein weiteres Türenpaar als abschließbarer Ausgang aus dem Raumbereich vorgesehen ist.

Ein weiterer, auch in Ergänzung nutzbarer, Anwendungsfall besteht darin, in Abhängigkeit von einer Information, die einer bestimmten Person oder Personengruppe zugeordnet ist oder wird, variabel einen durch diese zu nehmenden Weg zu konfigurieren, um somit die Bewegung der Person oder Personengruppe im Sinne einer Wegweiche steuern zu können. Beispielsweise kann dies im Rahmen von Passkontrollen bei der Einreise an einem Flughafen der Fall sein, wo ein Strom aus per Flugzeug am Flughafen angekommenen Reisenden für die Einreisekontrolle in Abhängigkeit von ihrer Nationalität (z.B. Inländer vs. Ausländer), die etwa durch Auslesen eines Passdokuments bestimmt werden kann, anhand einer variablen Wegführung mittels des Systems in verschiedene Teilbereiche eines Einreisekontrollbereichs des Flughafens geleitet werden sollen.

Ein wesentlicher Maßstab für die Beurteilung von Systemen zur Personenflusssteuerung ist neben der Abfertigungsqualität, die z.B. anhand einer Fehlerrate messbar sein kann, auch eine hohe Abfertigungsrate, z.B. messbar als Anzahl von anhand des Systems abgefertigten bzw. geschleusten Personen je Zeiteinheit.

Es ist eine Aufgabe der Erfindung, ein verbessertes System zur Personenflusssteuerung bereitzustellen, welches insbesondere einen hohe Abfertigungsrate ermöglicht bzw. fördert.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein Aspekt der hier vorgestellten Lösung betrifft ein System zur Personenflusssteuerung, wobei das System aufweist:
(i) eine Passagesteuerungseinrichtung mit zumindest einem beweglichen physischen Personenflussführungselement zum Steuern einer Bewegung zumindest einer Person durch einen durch das System definierten Passagebereich, wobei
   - das bzw. jedes Personenflussführungselement eine teiltransparente Projektionsfläche zur Darstellung, insbesondere in Reflektion und/oder Transmission, einer darauf optisch projizierbaren Abbildung aufweist, und
   - die Passagesteuerungseinrichtung zwischen zumindest zwei verschiedenen Konfigurationen überführbar ist, die sich bezüglich einer Position und/oder Orientierung des bzw. jedes Personenflussführungselements und bezüglich der dadurch bedingten Passagemöglichkeit für Personen unterscheiden;
(ii) eine Steuerung, die konfiguriert ist, die Passagesteuerungseinrichtung in Abhängigkeit von zumindest einer, insbesondere sensorisch, erfassten Information, insbesondere Authentifizierungsinformation, bezüglich der zumindest einen Person, deren Bewegung durch den Passagebereich zu steuern ist, zu veranlassen, eine entsprechend zugeordnete Konfiguration der Passagesteuerungseinrichtung einzunehmen; und
(iii) eine Projektionseinrichtung zum Erzeugen einer Abbildung einer Hinweisinformation, insbesondere zur Personenflussführung (z.B. Wegweiser, Freigabeanzeige oder Sperranzeige), mittels optischer Projektion auf die jeweilige Projektionsfläche des bzw. jedes Personenflussführungselements.

Unter dem Begriff "System zur Personenflusssteuerung", wie hierin verwendet, ist insbesondere ein System zu verstehen, das konfiguriert ist, eine Passage, insbesondere einen Durchgang, mehrerer sich individuell bewegender, insbesondere gehender, laufender oder sich mit einem individuellen Bewegungshilfsmittel (z.B. Rollstuhl, Rollator, Skateboard, Fahrrad, Roller, u. ä., mit oder ohne Antrieb) bewegender Personen (Personenfluss) durch einen bestimmten Raumbereich, zu steuern. Im Rahmen dieser Steuerung können insbesondere eine oder mehrere der folgenden Maßnahmen von dem System bereitgestellt werden: Bereitstellen einer Kommunikation an die Person bzw. Personen, um dieser bzw. diesen mittzuteilen, ob oder ggf. auf welchem Weg die Passage durch den Raumbereich freigegeben ist bzw. wird (Passagemöglichkeit(en)); eine Sperrung oder Freigabe der Passage; eine Auswahl oder sonstige Konfiguration eines für die die Passage durch den Raumbereich zu nehmenden Wegs, insbesondere unter Sperrung zumindest eines dazu alternativen Wegs. Ein solches System kann insbesondere eine Personenschleuse sein oder aufweisen.

Unter dem Begriff "Passagebereich", wie hierin verwendet, ist insbesondere ein durch oder bezüglich des Systems definierter Raumbereich zu verstehen, der konfiguriert ist, eine Passage von einer oder mehreren Personen individuell oder als Gruppe derart zu ermöglichen, dass diese Passage unter Kontrolle bzw. Steuerung des Systems erfolgen kann. Der Passagebereich kann dazu insbesondere räumlich von der Umgebung abgegrenzt sein, etwa durch eine oder mehrere Wände oder sonstige Barrieren. Ein Passagebereich kann insbesondere als Sicherheitskorridor ausgebildet sein, in dem eine Personenkontrolle und/oder -authentifizierung und/oder eine davon abhängige Zugangsbeschränkung erfolgt.

Unter dem Begriff "Passagesteuerungseinrichtung", wie hierin verwendet, ist insbesondere eine Vorrichtung, insbesondere ein Sub-System eines Systems zur Personenflusssteuerung, zu verstehen, das je nach seiner aktuellen Konfiguration einen Weg für die Passage einer oder mehrerer Personen durch den Passagebereich freigeben oder sperren oder einen solchen Weg variabel festlegen kann (z.B. ähnlich einer Weiche in einem Schienennetz).

Unter dem Begriff "physisches Personenflussführungselement" bzw. kurz "Personenflussführungselement", wie hierin verwendet, ist ein massebehaftetes, zwischen verschiedenen Stellungen (d.h. Positionen und/oder Orientierungen) bewegliches Element (insbesondere ein Bauteil oder eine Baugruppe) einer Passagesteuerungseinrichtung zu verstehen, das geeignet ist, in Abhängigkeit von seiner aktuellen Stellung einen Bewegungsweg zumindest einer Person durch den Passagebereich zu definieren, insbesondere deren Bewegung zu führen, oder aber einen solchen Bewegungsweg zu versperren. Insbesondere kann ein Personenflussführungselement dazu zumindest eine Tür, Schranke oder eine sonstige bewegliche Absperrung oder eine Kombination aus zwei oder mehr davon aufweisen.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Mithilfe eines lösungsgemäßen Systems ist es insbesondere möglich, die durch das System zu steuernde Bewegung der zumindest einen Person bzw. des Personenflusses so zu beeinflussen, dass das System dabei, soweit nicht aufgrund der Information bezüglich der zumindest einen Person eine Sperre der Passage veranlasst ist, eine ununterbrochene Passage der Person(en) ohne stationäre Interaktion mit dem System, wie etwa einer Interaktion mit einer Benutzerkonsole, ermöglicht (engl. "Seamless Travel").

Die Steuerung der ungestörten Bewegung der Person(en) im Rahmen der Passage wird dabei durch die auf die jeweilige Projektionsfläche des bzw. jedes Personenflussführungselements projizierte Information im Sinne einer Personenflussführung unterstützt, so dass Verzögerungen bei der Passage aufgrund von fehlender Orientierung oder Klarheit bezüglich des geforderten Verhaltens der abzufertigenden Person(en), insbesondere über die aktuell für sie verfügbare(n) Passagemöglichkeit(en), seitens des Systems entgegengewirkt und somit eine hohe Durchsatzrate gefördert wird.

Besonders zweckmäßig ist es dabei, dass die projizierte Information genau dort angezeigt wird, wo in der Regel auch das Augenmerk der Person(en) bei der Passage liegt, nämlich auf dem bzw. den Personenflussführungselement(en), die primär die verfügbare(n) Passagemöglichkeit(en) definieren. Des Weiteren ist die Lösung aufgrund der Projektion der Hinweisinformation hochflexibel bzgl. der Möglichkeit, variabel verschiedenste, insbesondere auch sich dynamisch verändernde Hinweisinformationen darzustellen. Das zumindest eine Personenflussführungselement kann dabei diesbezüglich rein passiv sein und benötigt dann insbesondere keine eigene Energie- oder Datenversorgung für die Anzeige. Dementsprechend kann es besonders gewichtssparend ausgelegt sein, so dass für seine Bewegung weniger Antriebsenergie eingesetzt werden muss und insbesondere auch sehr schnelle Bewegungen bei schon geringer Antriebsleistung möglich sind.

Da der Raumbedarf zur Umsetzung der Lösung sehr gering ist und insbesondere die Breite des Systems bzw. des Raumbereichs nicht oder nur wenig beeinflusst, ergibt sich zudem der Vorteil, dass eine sehr platzsparende Implementierung ermöglicht ist. Dies kann insbesondere dazu genutzt werden, auf begrenztem Raum eine Mehrzahl solcher Systeme nebeneinander anzuordnen und somit auch insgesamt eine auf ein solches Cluster von Systemen bezogen hohe Durchsatzrate zu erreichen. Man denke hier etwa an eine Lösung zur Ausweiskontrolle oder Ticketkontrolle einer Vielzahl von Personen an Flughäfen, Fährterminals, Stadien oder anderen Großveranstaltungsorten. Ein weiterer positiver Effekt einer auf solche Weise erhöhten Durchsatzrate kann in der Verringerung eines Ansteckungsrisikos bezüglich Ansteckungskrankheiten (vgl. Covid 19-Pandemie, SARS und ähnliches) im Hinblick auf eine Vermeidung bzw. Verkürzung von Abfertigungsschlangen im Rahmen der Personenkontrolle bzw. Personenflusssteuerung durch das System liegen.

Nachfolgend werden verschiedene beispielhafte Ausführungsformen des Systems beschrieben, die jeweils, soweit dies nicht ausdrücklich ausgeschlossen wird oder technisch unmöglich ist, beliebig miteinander kombiniert werden können.

Bei einigen Ausführungsformen weist die Passagesteuerungseinrichtung zumindest zwei Personenflussführungselemente auf. Die Projektionsfläche eines ersten Personenflussführungselements weist einen ersten Teilbereich auf, in dem sie für das zum Zwecke der optischen Projektion von der Projektionseinrichtung aussendbare Licht eine höhere Transparenz aufweist als in einem zweiten, verschiedenen Teilbereich der Projektionsfläche. Dies ist so ausgestallte, dass in zumindest einer der Konfigurationen der Passagesteuerungseinrichtung mittels der Projektion einerseits eine erste Abbildung durch den ersten Teilbereich hindurch auf die Projektionsfläche eines zweiten, vom ersten Personenflussführungselement verschiedenen, Personenflussführungselements und andererseits eine zweite Abbildung auf den zweiten Teilbereich der Projektionsfläche des ersten Personenflussführungselements erzeugt werden kann. So ist es möglich, mit einem einzigen Projektor der Projektionseinrichtung auf beiden Personenflussführungselementen jeweils eine Hinweisinformation oder einen Teil davon anzuzeigen.

Bei einigen Ausführungsformen ist die Projektionseinrichtung konfiguriert, eine der jeweils aktuell eingenommenen Konfiguration der Passagesteuerungseinrichtung zugeordnete Hinweisinformation mittels optischer Projektion auf die jeweilige Projektionsfläche des bzw. jedes Personenflussführungselements abzubilden. So lässt sich die Personenflusssteuerung noch weiter verbessern, da die Hinweisinformation jeweils der aktuellen Konfiguration angepasst werden kann. Beispielsweise kann bei versperrter Passage ein Sperrhinweis, bei freigegebener Passage dagegen ein Freigabehinweis angezeigt werden.

Bei einigen Ausführungsformen ist das System konfiguriert, in zumindest einer der Konfigurationen der Passagesteuerungseinrichtung voneinander unterschiedliche Abbildungen auf zumindest zwei der Personenflussführungselemente zu projizieren. Dies kann zum einen dazu genutzt werden, auf den Personenflussführungselementen verschiedenen Hinweisinformationen anzuzeigen, um so den Personenfluss genauer steuern zu können. Es kann insbesondere so ausgestaltet sein, dass das System (situationsabhängig) konfigurierbar ist, auf einem der Personenflussführungselemente einen Sperrhinweis und auf dem anderen eine Durchgangshinweis darzustellen, um der Person bzw. den Personen anzuzeigen, durch welches der Personenflussführungselemente ein einzuschlagender Weg durch den Passagebereich freigeben ist oder wird. Es kann alternativ insbesondere so ausgestaltet sein, dass das System (situationsabhängig) konfigurierbar ist, auf einem der Personenflussführungselemente eine nicht-biometrische Information, beispielsweise eine Handlungsanweisung oder eine Sicherheitsinformation, und auf dem anderen eine biometrische Information einer Person oder eine sonstige einem Authentifizierungsprozess zugeordnete Information darzustellen. Zum anderen kann dies aber auch dazu genutzt werden, insgesamt eine Hinweisinformation, z.B. einen Hinweis in Form eines Zeichens oder eines Bilds anzuzeigen, der sich aus den verschiedenen Abbildungen zusammensetzt. Insbesondere bei nebeneinander angeordneten Projektionsflächen, z.B. koplanar angeordneten Projektionsflächen, der zwei Personenflussführungselemente lässt sich somit insgesamt eine größere Gesamtprojektionsfläche für die Darstellung nutzen.

Bei einigen Ausführungsformen ist die Projektionseinrichtung konfiguriert, zum Erzeugen der jeweiligen Abbildung polarisiertes Licht auf die Projektionsfläche des bzw. jedes Personenflussführungselements zu strahlen. Das bzw. zumindest ein Personenflussführungselement weist zudem im Bereich seiner Projektionsfläche einen Polarisationsfilter auf, sodass diese Projektionsfläche bezüglich dem darauf von der Projektionseinrichtung zum Erzeugen der jeweiligen Abbildung projizierbaren polarisierten Licht eine andere Transparenz aufweist als bezüglich unpolarisiertem Licht. Dies kann insbesondere dafür genutzt werden, eine für normales unpolarisiertes Umgebungslicht zumindest weitgehend transparente Projektionsfläche bereitzustellen, auf der trotz dieser Transparenz die zu projizierende Hinweisinformation aufgrund der Nutzung des Polarisationseffekts (Prinzip gekreuzter Polarisationen) gut sichtbar dargestellt werden können. So bleibt der Blick der Person in Bewegungsrichtung bzw. durch die Projektionsfläche weitgehend ungestört und dennoch kann die dargestellte Hinweisinformation gut wahrgenommen werden. Auch eine Beleuchtung des Passagebereichs durch die Projektionsfläche hindurch wird bzw. bleibt somit möglich. Insbesondere kann dazu das bzw. zumindest ein Personenflussführungselement im Bereich seiner Projektionsfläche mit einer Beschichtung versehen sein, insbesondere mit einer Folie wie etwa einer Klebefolie, die den Polarisationsfilter aufweist. So kann das Personenflussführungselement selbst insbesondere aus einem für unpolarisiertes Licht weitgehend transparentem Material (wie etwa Glas oder Plexiglas) hergestellt sein, auf das die Beschichtung zumindest im Bereich der Projektionsfläche aufgebracht ist.

Bei einigen Ausführungsformen ist das System so konfiguriert, dass die jeweilige Projektionsfläche des zumindest einen Personenflussführungselements von der Projektionseinrichtung in allen Konfigurationen der Passagesteuerungseinrichtung beleuchtbar ist, um darauf per Projektion die jeweilige der jeweiligen Konfiguration zugeordnete Abbildung zu erzeugen. Dies ermöglicht es, die Projektionsfläche in jeder der Konfigurationen für die Darstellung von Hinweisinformation zu nutzen.

Bei einigen Ausführungsformen ist das System konfiguriert, die zu projizierende Information bezüglich ihres Inhalts oder ihrer Darstellung in Abhängigkeit von einer, insbesondere momentanen, Stellung des Personenflussführungselements bzw. zumindest eines der Personenflussführungselemente anzupassen, während dieses zwischen zwei verschiedenen Konfigurationen der Passagesteuerungseinrichtung überführt wird. So lassen sich insbesondere perspektivische Anpassungen bezüglich der Darstellung der Hinweisinformation im Hinblick auf ein Aufrechterhalten einer guten Erkennbarkeit für die passierende Person realisieren. Zudem ist es möglich, bei Hinweisen mit Richtungsinformation, bei denen es auf die wahrnehmbare Orientierung der Darstellung ankommt, diese Orientierung so anzupassen, dass je nach Position der Person bzw. Stellung des Personenflussführungselements weiterhin die korrekte, d.h. die im Rahmen der Passage empfohlene oder von der Person zu befolgende, Richtung angezeigt wird.

Insbesondere kann das System konfiguriert sein, eine zu projizierende Hinweisinformation bezüglich ihres Inhalts oder ihrer Darstellung in Abhängigkeit von der Stellung des Personenflussführungselements bzw. zumindest eines der Personenflussführungselemente fließend oder in mehreren aufeinanderfolgenden Stufen anzupassen, während dieses zwischen zwei verschiedenen Konfigurationen der Passagesteuerungseinrichtung überführt wird. So lässt sich eine besonders effektive Personenflusssteuerung fördern, da aufgrund der dynamischen Darstellung die Aufmerksamkeit der Person bezüglich der Hinweisinformation gesteigert und somit deren, insbesondere verzögerungsfreie bzw. rechtzeitige Kenntnisnahme durch die Person(en) gesteigert werden kann.

Bei einigen Ausführungsformen weist die Passagesteuerungseinrichtung zumindest zwei Personenflussführungselemente auf. Die Projektionseinrichtung ist zudem konfiguriert, eine zu projizierende Hinweisinformation in Form eines Bilds, Zeichens und/oder Texts anteilig auf die jeweiligen Projektionsflächen der zumindest zwei Personenflussführungselemente zu projizieren, so dass das entstehende Abbild der projizierten Information über die verschiedenen Projektionsflächen verteilt erzeugt wird. Somit lassen sich insbesondere größere Darstellungen und/oder eine höhere Flexibilität bezüglich der Positionierung der Darstellung erreichen.

Bei einigen Ausführungsformen weist das System des Weiteren eine Sensorik, insbesondere eine Bildsensorik (z.B. optische Kamera), zum zumindest anteiligen bildlichen Erfassen der Person(en) und/oder zum Erfassen zumindest eines jeweiligen biometrischen Merkmals der Person(en) auf. Insbesondere kann die Sensorik eine Bildsensorik aufweisen, die konfiguriert ist, Gesichtsaufnahmen der Person(en) aufzunehmen. Dies kann insbesondere zur Gesichtserkennung, vor allem im Rahmen einer Authentifizierung der Person(en) genutzt werden. Entsprechend kann das System auch eine Authentifizierungsvorrichtung zur Authentifizierung von Personen aufweisen, die zu diesem Zweck von der Bildsensorik aufgenommene Gesichtsaufnahmen auswerten kann. Entsprechend kann die Authentifizierungsvorrichtung alternativ oder zusätzlich konfiguriert sein, das zumindest eine biometrische Merkmal je Person zu erfassen. Die somit gewonnene Authentifizierungsinformation kann wiederum als eine erfasste Information bezüglich der durch das System abzufertigenden Person(en) genutzt werden, um in Abhängigkeit davon die Passagesteuerungseinrichtung zu steuern.

Die Steuerung kann bei einigen dieser Ausführungsformen insbesondere konfiguriert sein, die Passagesteuerungseinrichtung in Abhängigkeit von zumindest einem mittels der Sensorik erfassten, zumindest anteiligen Bild oder biometrischen Merkmal der Person, deren Bewegung durch den Passagebereich zu steuern ist, zu veranlassen, eine entsprechend zugeordnete der Konfigurationen einzunehmen.

Bei einigen Ausführungsformen kann das System auch konfiguriert sein, in zumindest einer Konfiguration der Passagesteuerungseinrichtung mittels der Projektionseinrichtung als eine dieser Konfiguration zugeordnete Information ein mittels der Sensorik erfasstes zumindest anteiliges Bild oder biometrisches Merkmal der Person auf die jeweilige Projektionsfläche zumindest eines Personenflussführungselements zu projizieren. Auf diese Weise kann das aufgenommene Bild, insbesondere ein Video-Bildstrom, oder das erfasste biometrische Merkmal der Person als Hinweis angezeigt werden, was insbesondere dazu genutzt werden kann, der Person eine Orientierungshilfe bezüglich der Einnahme einer im Hinblick auf die Gesichtsaufnahme optimale oder jedenfalls für eine Authentifizierung ausreichende Gesichtsposition zu liefern. Entsprechendes kann für die Erfassung des zumindest einen biometrischen Merkmals gelten. Auch wird die Person dadurch informiert, dass ihr Gesicht gerade aufgenommen wird bzw. ihr biometrisches Merkmal erfasst wird bzw. wurde.

Insbesondere kann die Sensorik bei einigen Ausführungsformen einen Bildsensor mit einer optischen Achse aufweisen, der so angeordnet ist, dass seine optische Achse durch die Projektionsfläche eines Personenflussführungselements oder in einem Zwischenraum zwischen den jeweiligen Projektionsflächen von zumindest zwei benachbarten Personenflussführungselementen verläuft. So lässt sich insbesondere erreichen, dass der Verlauf der optischen Achse für die Bildaufnahme in der Nähe der Blickrichtung der Person liegt, wenn diese auf die angezeigte Hinweisinformation, insbesondere gegebenenfalls das ihr angezeigte eigene Gesichtsbild, blickt.

Die optische Achse kann insbesondere ein Lot auf die Projektionsfläche des zumindest einen Personenflussführungselements oder auf eine Tangentialfläche zu wenigstens einer der Projektionsflächen der zumindest zwei benachbarten Personenflussführungselementen bilden. Dies ist insbesondere dann vorteilhaft, wenn der gemäß der aktuellen Konfiguration der Passagesteuerungseinrichtung vorgesehene Weg durch den Passagebereich orthogonal zur Projektionsfläche verläuft, was insbesondere der Fall sein kann, wenn das Personenflussführungselement bezüglich der Bewegung der Person(en) bei der Passage rechtzeitig in eine Konfiguration bzw. Stellung gebracht, die ein Passieren durch die Person(en) ermöglicht.

Bei einigen Ausführungsformen ist das System des Weiteren so konfiguriert, dass der Bildsensor nicht in einem Beleuchtungsfeld der Projektionseinrichtung liegt. So kann einer Beeinträchtigung der vom Bildsensor gelieferten Bilder durch das bei der Projektion von der Projektionseinrichtung ausgesandte Licht entgegengewirkt, insbesondere eine solche Beeinträchtigung vermieden, werden.

Dazu kann das System insbesondere zumindest eine der folgenden Konfigurationen aufweisen, um zu bewirken, dass der Bildsensor nicht in dem Beleuchtungsfeld der Projektionseinrichtung liegt: (i) der Bildsensor ist mittels zumindest einer optischen Blende gegenüber dem Beleuchtungsfeld abgeschirmt; (ii) der Bildsensor ist gegenüber der Projektionsfläche, durch die seine optische Achse verläuft, räumlich derart versetzt angeordnet, dass das Personenflussführungselement, zu dem die Projektionsfläche gehört, den Bildsensor gegenüber dem Beleuchtungsfeld abschirmt; (iii) ein von der Projektionseinrichtung zu projizierendes Bild wird durch das System so definiert oder modifiziert, dass die Strahlungsintensität von solchen Bildanteilen des Bilds, die bei der Projektion auf den Bildsensor treffen bzw. treffen würden, auf null gesetzt oder gegenüber anderen Bildanteilen reduziert wird.

Bei einigen Ausführungsformen ist durch das System eine Wegweiche derart definiert, dass: (i) eine erste Konfiguration der Passagesteuerungseinrichtung einen ersten Weg durch den Passagebereich für die Passage der Person freigibt; (ii) eine zweite, von der ersten Konfiguration verschiedene Konfiguration der Passagesteuerungseinrichtung einen zweiten, vom ersten Weg zumindest abschnittsweise verschiedenen Weg durch den Passagebereich für die Passage der Person freigibt; und (iii) dabei der jeweils andere Weg durch das Personenflussführungselement bzw. zumindest eines der Personenflussführungselemente versperrt wird. Das System kann somit insbesondere im Sinne einer Personenflusssteuerung im Sinne einer Wegesteuerung genutzt werden. Es ist auch denkbar anstelle von zwei alternativen noch mehr alternative Wege vorzusehen und die Passagesteuerungseinrichtung entsprechend so auszubilden, dass sie über eine entsprechende Anzahl von variabel einnehmbaren Konfigurationen verfügt, mittels derer die verschiedenen Wege selektiv für eine Passage freigegeben bzw. versperrt werden können.

Bei einigen Ausführungsformen ist die Projektionseinrichtung konfiguriert, die Abbildung der zur projizierenden Hinweisinformation zumindest anteilig als auf einer der Projektionsfläche gegenüberliegenden Seite des jeweiligen Personenflussführungselements dargestelltes Transmissionsbild zu erzeugen. So lässt sich insbesondere verhindern, dass der Strahlengang der Projektion durch die Anwesenheit der Person(en) unterbrochen oder gestört und somit die Darstellung der Hinweisinformation verhindert oder gestört wird.

Bei einigen alternativ oder kumulativ dazu implementierbaren Ausführungsformen ist die Projektionseinrichtung dagegen konfiguriert, die Abbildung der zur projizierenden Information zumindest anteilig als auf der Projektionsfläche des jeweiligen Personenflussführungselements dargestelltes Reflektionsbild zu erzeugen. Hiermit lässt sich insbesondere eine besonders hohe Bildqualität erreichen, da bei einer Transmission möglicherweise durch das zu durchstrahlende Material oder an dessen Grenzflächen auftretende Störungen im Strahlengang von vorneherein vermieden werden können. Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt
**Fig. 1** schematisch ein System zur Personenflusssteuerung, insbesondere Personenschleuse, gemäß einer beispielhaften ersten Ausführungsform;
**Fig. 2** eine schematische Darstellung verschiedener mittels optischer Projektion erzeugter beispielhafter Abbildungen von Hinweisinformation auf einer Positionsfläche eines Personenflussführungselements;
**Fig. 3** eine beispielhafte Darstellung einer Hinweisinformation in Form eines Gesichtsbilds auf einem Personenflussführungselement;
**Fig. 4** eine beispielhafte Darstellung einer Hinweisinformation in Form eines Gesichtsbilds auf zwei benachbarten Personenflussführungselementen; und
**Fig. 5** schematisch ein System zur Personenflusssteuerung gemäß einer beispielhaften zweiten Ausführungsform.

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Funktionale Einheiten, wie insbesondere eine Steuerungseinheit, können insbesondere als Hardware, Software oder eine Kombination aus Hardware und Software implementiert werden.

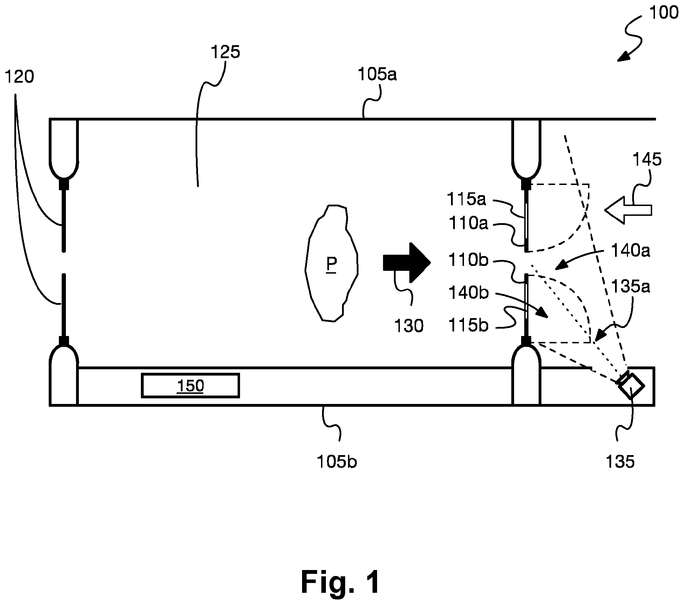

Bei der in **Fig. 1** illustrierten beispielhaften Ausführungsform 100 eines lösungsgemäßen Systems zur Personenflusssteuerung handelt es sich um eine Personenschleuse, wie sie beispielsweise zur Passkontrolle an Flughäfen eingesetzt werden kann. Dort kommt es in der Regel darauf an, eine Vereinzelung von Personen aus einem Personenfluss durchzuführen, so dass jede der Personen individuell kontrolliert, insbesondere authentifiziert, werden kann und in Abhängigkeit von dieser Kontrolle der weitere Weg, beispielsweise in einen Sicherheitsbereich des Flughafens, freigegeben wird oder nicht. Der Bezug auf einen Flughafen soll hier nur als Beispiel dienen. Tatsächlich ist eine Vielzahl verschiedenster Anwendungsfelder denkbar, bei denen eine Personenschleuse gemäß Ausführungsform 100 eingesetzt werden kann. Andere Beispiele sind Personenkontrollen in Schiffsterminals, an Eingängen zu Großveranstaltungen (wie etwa Stadien oder Hallen) oder zu Sicherheitsbereichen von Industrieanlagen oder geschützten Laborbereichen.

Das System 100 weist eine Passagesteuerungseinrichtung mit einem Paar von Eingangstüren 120 auf, die entlang einer Passagerichtung 130, insbesondere einer Durchgangsrichtung, einen Zugang zu einem Passagebereich 125 für eine mittels des Systems 100 abzufertigende Person P ermöglichen. Der Passagebereich 125 ist seitlich durch zwei Seitenwände 105a und 105b begrenzt und dadurch gegen einen unbefugten Zutritt von der Seite her in den Passagebereich 125 geschützt.

Des Weiteren weist die Passagesteuerungseinrichtung ein Paar von physischen Personenflussführungselementen 110a,b in Form eines Paares von Ausgangstüren auf, die den Passagebereich 125 begrenzen oder, wie illustriert, in einen ersten Abschnitt zwischen den Türenpaaren 120 und 110a,b und einen zweiten Abschnitt nach unterteilen, der entlang der Passagerichtung 130 betrachtet hinter dem Türenpaar 110a,b liegt. Die Türen des Türenpaars 110a,b sind durch eine Steuerungseinrichtung 150 in Abhängigkeit von zumindest einer (im Rahmen einer automatisierten Kontrolle, z.B. per drahtlosem Ausweislesen oder Gesichtserkennung) erfassten Information bezüglich der zumindest einen Person P steuerbar, eine der jeweiligen Information zugeordnete Konfiguration einzunehmen.

Die Information kann insbesondere ein Ergebnis eines Authentifizierungsprozesses bezüglich der Person P sein, sodass sich das Türenpaar 110a,b im Falle einer erfolgreichen Authentifizierung oder einer darauf beruhende Durchgangsgenehmigung öffnet, um der Person P den weiteren Weg durch den Passagebereich 125 freizugeben (erste Konfiguration), während sie andernfalls geschlossen wird bzw. bleibt (zweite Konfiguration). Während des Kontrollprozesses sind die Eingangstüren 120, ebenfalls durch die Steuerungseinrichtung 150 gesteuert, geschlossen, um sicherzustellen, dass keine weitere Person in den Passagebereich eintritt und dort gegebenenfalls den Kontrollprozess stört oder unterläuft.

Anstelle der Türen 110a,b der Passagesteuerungseinrichtung können auch geeignete andere Barrieren (beispielsweise rotatorisch und/oder translatorisch bewegliche Schranken) verwendet werden, die sich anhand einer Steuerung, insbesondere der Steuerungseinrichtung 150, so zwischen verschiedenen Konfigurationen überführen lassen, dass damit eine Eingang bzw. Ausgang aus dem Passagebereich 125 freigegeben oder aber anteilig oder vollständig versperrt werden kann. Die Passagesteuerungseinrichtung ist somit zwischen zumindest zwei verschiedenen Konfigurationen (Türenpaar 110a,b offen oder geschlossen) überführbar, die sich bezüglich einer Position und/oder Orientierung des bzw. jedes Personenflussführungselements 110a,b und bezüglich der dadurch bedingten Passagemöglichkeit für Personen P unterscheiden.

Um es den abzufertigenden Personen P eines Personenflusses möglichst einfach zu machen, den Passagebereich 125 schnell und insbesondere auch ohne anhalten zu müssen, zu passieren, nutzt das System 100 die Möglichkeit, mittels optisch wahrnehmbarer Hinweise (Hinweisinformation) Einfluss auf das Bewegungsverhalten der Person(en) zu nehmen. Diese Hinweise können insbesondere in Form von Symbolen oder schriftlichen Instruktionen den Personen P zur Verfügung gestellt werden, um ihnen zu helfen, sich schnell bezüglich des Ergebnisses der Kontrolle und/oder des weiteren Wegs zu orientieren, ohne auf gegebenenfalls vorhandene weitere Bedienelemente achten zu müssen. Insbesondere kann damit ein sogenanntes "Seamless Travel"-Szenario gefördert werden, bei dem die vom System 100 gerade abzufertigenden Personen ohne weitere von ihnen durchzuführende Interaktionen mit dem System 100 dieses passieren und dabei kontrolliert werden können.

Jedes der Personenflussführungselemente 110a und 110b weist jeweils zumindest eine teiltransparente Projektionsfläche 115a bzw. 115b zur Darstellung einer darauf mittels einer Projektionseinrichtung 135 optisch projizierbaren Abbildung auf. Insbesondere können die Türen des Türenpaares 110a,b zumindest im Bereich der Projektionsflächen 115a,b aus einem lichtdurchlässigen Material, insbesondere aus Glas oder Plexiglas, bestehen, dessen Transparenzgrad jedoch von einer Polarisationsrichtung einer einfallenden Strahlung abhängig ist. Dies kann etwa dadurch erreicht werden, dass im Bereich der Projektionsflächen 115a,b eine Polarisationsfolie flächig auf die Türen 110a,b aufgebracht ist, die als Polarisator wirkt, insbesondere als Linearpolarisator. Die Projektionseinrichtung 135 kann entsprechend so konfiguriert sein, dass sie für die Projektion der darzustellenden Hinweise auf die Projektionsfläche 115a,b (insbesondere linear) polarisiertes Licht verwendet, das eine Polarisationsrichtung aufweist, die gekreuzt zu einer Polarisationsrichtung der Polarisationsfolie verläuft, sodass für das projizierte Licht eine (vom Winkel zwischen den Polarisationsrichtungen abhängige) reduzierte Transparenz der Projektionsflächen auftritt. Auf diese Weise lassen sich sowohl in Transmission als auch in Reflektion, gut sichtbare Abbildungen von Hinweisen auf den Projektionsflächen erzeugen, die sich von dem sie umgebenden Bereich der Türflächen deutlich abheben.

Die Projektionseinrichtung 135 kann insbesondere ganz oder teilweise in einer der Seitenwände, im vorliegenden Beispiel in der Seitenwand 105b, untergebracht sein. Bei der Ausführungsform 100 ist die Projektionseinrichtung 135 auf solche Weise angeordnet, dass sie die jeweiligen Projektionsflächen beider Türen 100a,b zum Anzeigen von Hinweisen aus dem zweiten Abschnitt des Passagebereichs heraus mit einer Richtungskomponenten entlang einer Gegenrichtung 145 zur Passagerichtung 130 beleuchten kann. So sind die durch die Projektion darstellbaren Abbildungen der Hinweise vom ersten Abschnitt aus, der in Passagerichtung vor dem Türenpaar 110a,b liegt, in Transmission sichtbar.

Eine optische Achse 135a der Projektionseinrichtung 135, die das Zentrum eines von der Projektionseinrichtung 135 ausgehenden Projektionsraumwinkels, insbesondere Projektionslichtkegels, bildet, ist auf einen Zwischenraum zwischen den beiden Türen 110a b gerichtet. Dementsprechend definiert eine durch die optische Achse 135a und vertikal zur Bildebene in Fig. 1 verlaufende virtuelle Ebene eine Trennfläche zwischen einem (jeweils in Passagerichtung gesehen) ersten Strahlungsfeld 140a für einen linken Bildanteil und einem zweiten Strahlungsfeld 140b für einen rechten Bildanteil. So ist es insbesondere möglich, auf die erste Tür 110a einen ersten Hinweis zu projizieren, der sich von einem zweiten Hinweis unterscheidet, der simultan auf die zweite Tür 110b projiziert wird.

Vorzugsweise sind die Position und/oder die Ausrichtung der Projektionseinrichtung 135 so gewählt, dass sie beide Türen 110a,b sowohl in deren offenen als auch in deren geschlossenen Zustand zur Darstellung von Hinweisen auf den jeweiligen Projektionsflächen 115a, b beleuchten kann (vgl. in Fig. 1 die Lage der Strahlungsfelder 140a und 140b relativ zu den Türstellungen der Türen 110a,b, im geöffneten und im geschlossenen Zustand; die Schwenkbereiche der Türen 110a,b sind jeweils gestrichelt eingezeichnet). Es ist auch denkbar, dass die Position und/oder die Ausrichtung der Projektionseinrichtung 135 in Abhängigkeit von der Konfiguration der Türen 110a,b variabel einstellbar ist, etwa wiederum durch die Steuerungseinrichtung 150 gesteuert.

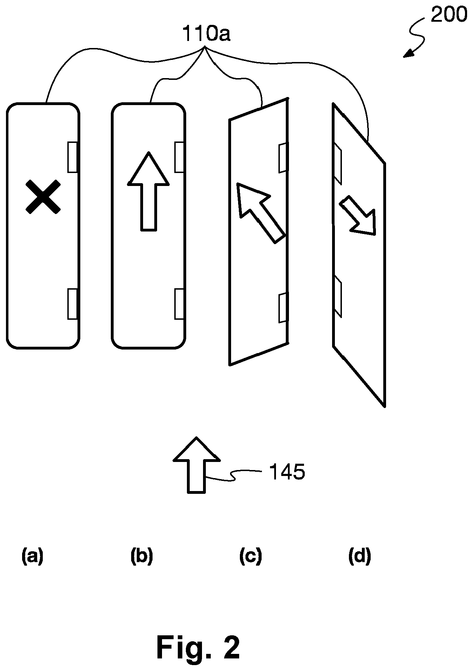

In **Fig. 2** ist eine schematische Darstellung 200 verschiedener, anhand einer optischen Projektion mittels der Projektionseinrichtung 135 erzeugbarer beispielhafter Abbildungen von Hinweisinformationen auf einer jeweiligen Projektionsfläche 115a,b eines Personenflussführungselements (hier beispielhaft der Türen 110a,b) gezeigt. Dabei zeigt die **Teilfigur 2 (a)** einen beispielhaften Hinweis zur Anzeige dafür, dass der Durchgang durch den Passagebereich 125 durch das Türenpaar 110a, b oder jedenfalls die Tür 110a versperrt ist, während die **Teilfiguren 2 (b)** - **(d)** einen beispielhaften Hinweis dafür zeigen, dass der Durchgang freigegeben wird, wobei sich die Darstellung des Hinweises als Funktion der Stellung der Tür 110a ändert, insbesondere so, dass von der Perspektive der passierenden Person P aus gesehen der dargestellte Pfeil jeweils in die einzuschlagende Durchgangsrichtung durch das Türenpaar 110 a,b zeigt. Die Änderung kann fließend oder in Stufen erfolgen, um so eine animierte Darstellung des Hinweises zu erzeugen. Die **Teilfiguren 2 (c) und 2 (d)** sind auf einen Blickwinkel auf die Tür bezogen gezeichnet, der gegenüber der Passagerichtung 130 leicht gekippt ist, so dass auch die vollständig geöffnete Tür 110a dargestellt werden kann, von der man andernfalls nur die Stirnkante sehen würde (wenn ihr Öffnungswinkel 90° gegenüber der geschlossenen Konfiguration beträgt).

Die Darstellung der Fig. 2 zeigt dabei die Rückseite der Tür 110a vom zweiten Abschnitt des Passagebereichs 125 aus in der Gegenrichtung 145 zur Passagerichtung gesehen. Die Person P kann diese Hinweise dagegen in Transmission von der anderen Seite (Frontseite) der Tür 110a aus wahrnehmen. Die Darstellung der Projektion ändert sich mit der Stellung der Türen.

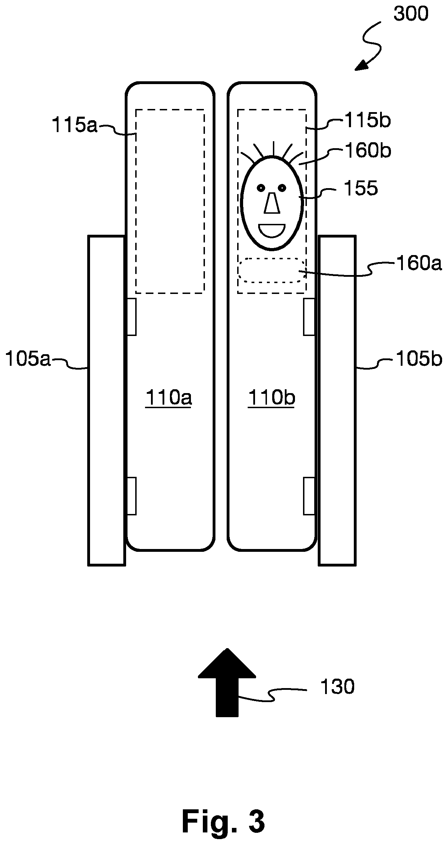

**Fig. 3** zeigt eine beispielhafte Darstellung 300 - aus Sicht der Person P entlang der Passagerichtung 130 - einer Hinweisinformation in Form eines Gesichtsbilds 155 auf einem Personenflussführungselement, hier konkret auf einer Projektionsfläche 115b der Tür 11 0b. Das Gesichtsbild 155 kann insbesondere mittels einer Kamera des Systems 100 aufgenommen worden sein und zur Authentifizierung der Person mittels Gesichtserkennung dienen. Es wird der Person P angezeigt, um diese darüber zu informieren, dass das Bild (insbesondere als Video) aufgenommen wird bzw. wurde und hier anhand der Position des dargestellten Bildes eine Rückmeldung darüber zu geben, ob sich das Gesicht der Person P bezüglich seiner Lage relativ zur Kamera an einer für die Authentifizierung per Gesichtserkennung geeigneten Stelle befindet. So kann die Person P, soweit erforderlich, die Lage ihres Gesichts verändern, um die Gesichtserkennung und darauf beruhend im Falle einer erfolgreichen Authentifizierung den vollständigen Durchgang durch den Passagebereich 125 zu ermöglichen.

In dem bzw. für den Fall, dass sowohl in geöffneten als auch im geschlossenen Zustand der Türen 110a, b eine Projektion von Hinweisen auf beide Türen 110a,b möglich sein soll, weist die Projektionsfläche 115b einen ersten Teilbereich 160a und einen davon verschiedenen zweiten Teilbereich 160b auf, die sich bezüglich ihrer Transparenz unterscheiden. Der erste Teilbereich 160a weist dabei eine höhere Transparenz auf als der zweite Teilbereich 160b, sodass bei einem geöffneten Zustand der Tür 110b durch ihn hindurch mittels der Projektionseinrichtung 135 eine Projektion von Hinweisen auf die Projektionsfläche 115a der anderen Tür 110a möglich ist. Im oben genannten Fall der Verwendung eines Polarisationsfilters, insbesondere einer Polarisationsfolie, kann dieser bzw. diese insbesondere im Teilbereich 160a eine Aussparung aufweisen, sodass hier dort keine Polarisation stattfindet.

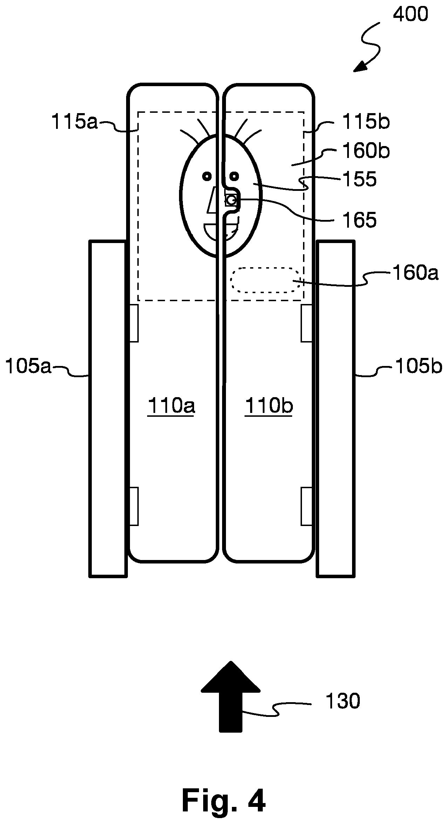

**Fig. 4** zeigt eine beispielhafte Darstellung 400 einer Hinweisinformation in Form eines Gesichtsbilds 155 auf zwei benachbarten Personenflussführungselementen, hier konkret auf den Türen 110a und 110b. Die beiden Strahlungsfelder 140a und 140b, werden hier somit genutzt, um insgesamt ein einziges Bild beziehungsweise einen zusammenhängenden Hinweis darzustellen. Dasselbe Prinzip lässt sich auch auf andere Hinweise als ein Gesichtsbild 155 anwenden, sodass beispielsweise die Hinweise aus Fig. 2 jeweils so projiziert werden können, dass sie sich jeweils auf die Projektionsflächen 115a und 115b beider Türen 110a, b erstrecken.

In Fig. 4 ist auch eine Bildsensorik mit einem Bildsensor 165, insbesondere einer optischen 2D Kamera, zur Aufnahme des Gesichtsbilds 155 dargestellt. Er ist in einer Aussparung einer der Türen 110a,b, hier konkret der Tür 110b auf einer Höhe montiert, die geeignet ist, von dort aus das Gesichtsbild 155 perspektivisch günstig im Hinblick auf eine möglichst vollständige und schattenfreie Erfassung des Gesichts aufzunehmen. Dies kann beispielsweise eine Höhe zwischen 140cm und 180cm sein, so dass sie näherungsweise einer durchschnittlichen Höhe eines Gesichtsmittelpunkts von abzufertigenden stehenden oder gehenden Personen entspricht. Eine optische Achse des Bildsensors 165 verläuft vorzugsweise orthogonal zur Türfläche bzw. im vorliegenden Beispiel entlang der Gegenrichtung 145. Durch die frontale Anordnung des Bildsensors 165 kann zudem auf einfache Weise ein biometrischen Anforderungen entsprechendes Gesichtsbild erfasst werden, ohne dass die Person P dazu ihren Kopf zuvor in die erforderliche Position, d.h. zur Kamera hin, drehen muss.

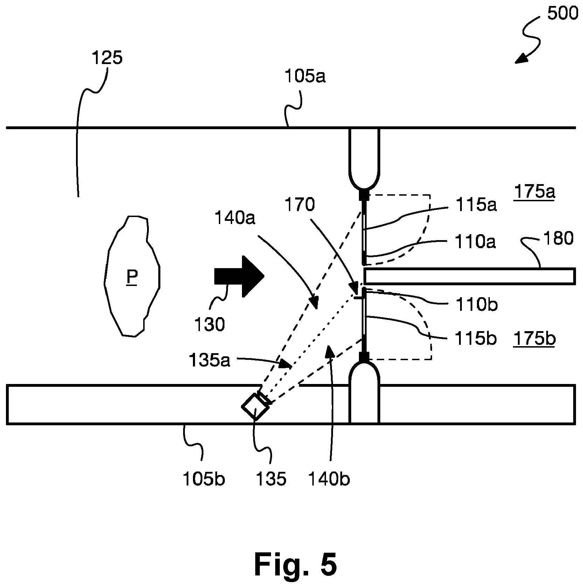

Der Bildsensor 165 kann insbesondere zugleich eine Infrarotkamera sein oder zusätzlich mit einer solchen ausgestattet sein, so dass auch eine strahlungsbasierte berührungslose Messung der Körpertemperatur der Person P möglich ist, etwa um Fieber und somit eine mögliche Infektionskrankheit zu erkennen. In diesem Fall kann die Steuerungseinrichtung auch konfiguriert sein, die Steuerung der Türen 110a,b und somit die Durchgangserlaubnis anstelle oder zusätzlich zu einer Authentifizierung in Abhängigkeit von der Temperaturmessung zu steuern, etwa so, dass Personen mit erhöhter Körpertemperatur der Durchgang verweigert wird oder im Sinne einer Wegweiche ein anderer Weiterweg aus dem Passagebereich 125 geöffnet wird als einer Person mit normaler Körpertemperatur (vgl. Fig. 5).

**Fig. 5** zeigt schematisch eine zweite beispielhafte Ausführungsform 500 eines lösungsgemäßen Systems zur Personenflusssteuerung. Das System 500 kann insbesondere als Abwandlung des Systems 100 aus Fig. 1 betrachtet werden, sodass auf die in beiden Systemen 100 bzw. 500 gleichen Bestandteile der Systeme hier nicht nochmals im Einzelnen eingegangen, sondern auf die entsprechenden Ausführungen zu Fig. 1 verwiesen wird.

Ein erster Unterschied des Systems 500 besteht darin, dass es als Durchgangsgate entworfen ist, wobei die Eingangstüren 120 entfallen. Es gibt hier somit keinen allseitig geschlossenen Schleusenbereich wie bei der Personenschleuse 100. Vielmehr wird zwar durch die Seitenwände 105a und 105b ein Korridor, insbesondere ein Sicherheitskorridor, mit einem entsprechenden Passagebereich 125 definiert. Ein temporäres Verschließen des Passagebereichs 125 in einer der Passagerichtung 130 entgegengesetzten Richtung ist hier jedoch nicht vorgesehen.

Ein weiterer Unterschied besteht darin, dass hier die Projektionseinrichtung 135 die Hinweise auf die - entlang der Passagerichtung 130 gesehen - vorderen Seiten (Frontseiten) des Türenpaares 110a,b projiziert, sodass die dadurch auf den Projektionsflächen 115a, 115b abgebildeten Hinweise als Reflexionsbild von der Person P wahrgenommen werden können. Dies hat insbesondere den Vorteil, dass ein etwaiges Blenden der Person P durch die projizierte Strahlung, wie sie bei einer Projektion in Transmissionsrichtung (vgl. Fig. 1) potenziell auftreten könnte, von vorneherein zumindest weitgehend vermieden werden kann.

Wenn entsprechend der Ausführungsform aus Fig. 4, ein Bildsensor an dem Türenpaar, insbesondere der Tür 110b angeordnet ist, dann kann zusätzlich eine Blende 170 vorgesehen sein, die verhindert, dass das von der Projektionseinrichtung 135 ausgestrahlte Licht, jedenfalls auf direktem Wege, in den Bildsensor 165 gelangt. Alternativ oder kumulativ ist es auch möglich, das von der Projektionseinrichtung 135 projizierte Bild derart zu definieren, dass es in dem auf den Bildsensor fallenden Bildbereich dunkel ("schwarz") ist, sodass keine Strahlung der Projektionseinrichtung in die Bildsensor 165 gelangt. Es ist auch denkbar, den Bildsensor 165 derart entlang der Passagerichtung 130 gegenüber der frontseitigen Oberfläche der Tür 110b zu versetzen, dass die Tür 110b selbst eine Blendenfunktion erfüllt, die derjenigen der Blende 170 zumindest im Wesentlichen entspricht. Dasselbe gilt entsprechend, wenn der Bildsensor 165 nicht an der Tür 110b, sondern an der Tür 110a angeordnet ist.

Schließlich besteht ein weiterer wesentlicher Unterschied darin, dass das System 500 im Sinne einer Wegweiche definiert ist, sodass durch die Geometrie des Systems 500 ausgangsseitig zwei durch eine Trennwand 180 getrennte, verschiedene Wege 175a und 175b als Ausgangsmöglichkeit aus dem Passagebereich 125 vorliegen. So kann der Weg der Person P aus dem Passagebereich 125 wahlweise über den ersten Weg 175a oder den zweiten Weg 175b erfolgen, je nachdem welche der beiden Türen 110a und 110b in Abhängigkeit von der zumindest einer erfassten Information bezüglich der Person P geöffnet wird.

Insbesondere kann dies beispielsweise so erfolgen, dass bei einer erfolgreichen Authentifizierung der Ausgang über den Weg 175a durch selektives Öffnen der Tür 110a freigegeben wird, während andernfalls durch selektives Öffnen der Tür 110b der zweite Weg 175b freigegeben wird. Wie schon erwähnt, kann die Ansteuerung der Türen zusätzlich oder stattdessen auch in Abhängigkeit von einer gemessenen Körpertemperatur der Person P erfolgen, beispielsweise so, dass wenn eine erhöhte Körpertemperatur gemessen wird, der Weg 175b freigegeben wird, während andernfalls der Weg 175a freigegeben wird.

Anstelle des Türenpaars 110a,b ist es insbesondere auch möglich (nicht in den Figuren dargestellt), eine Schiebetür vorzusehen, die entsprechend gesteuert wahlweise den ersten Weg 175a oder den zweiten Weg 175b freigibt und die eine Projektionsfläche aufweist, auf der jeweils durch die Projektionseinrichtung 135 geeignete Hinweise darstellbar sind.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Systeme, Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: System zur Personenflusssteuerung, insbesondere Personenschleuse, gemäß einer beispielhaften ersten Ausführungsform
- 105a, b: Seitenwände der Vorrichtung 100
- 110a, b: Personenflussführungselemente, Ausgangstüren
- 115a, b: Projektionsflächen
- 120: Eingangstüren
- 125: Passagebereich
- 130: Passagerichtung, insbesondere Durchgangsrichtung
- 135: Projektionseinrichtung
- 135a: optische Achse der Projektionseinrichtung 135
- 140a: Strahlungsfeld für in Passagerichtung gesehen linken Bildanteil
- 140b: Strahlungsfeld für in Passagerichtung gesehen rechten Bildanteil
- 145: Gegenrichtung zur Passagerichtung
- 150: Steuerung, insbesondere Steuerungseinheit
- 155: als Bild projiziertes Gesicht
- 160a: erster Teilbereich der Projektionsfläche 115b
- 160b: zweiter Teilbereich der Projektionsfläche 115b
- 165: Bildsensorik mit Bildsensor, insbesondere 2D Kamera
- 170: Blende
- 175a: erster Weg durch den Passagebereich
- 175 b: zweiter Weg durch den Passagebereich
- 180: Trennwand
- 200: Darstellung verschiedener mittels optischer Projektion erzeugter beispielhafter Abbildungen von Hinweisinformation auf einer Projektionsfläche eines Personenflussführungselements
- 300: beispielhafte Darstellung einer Hinweisinformation in Form eines Gesichtsbilds auf einem Personenflussführungselement
- 400: beispielhafte Darstellung einer Hinweisinformation in Form eines Gesichtsbilds auf zwei benachbarten Personenflussführungselementen
- 500: System zur Personenflusssteuerung gemäß einer beispielhaften zweiten Ausführungsform

- P: Person

## Patentansprüche

1. System (100; 500) zur Personenflusssteuerung, wobei das System (100; 500) aufweist:
eine Passagesteuerungseinrichtung mit zumindest einem beweglichen physischen Personenflussführungselement (110a; 110b) zum Steuern einer Bewegung zumindest einer Person (P) durch einen durch das System (100; 500) definierten Passagebereich (125), wobei das bzw. jedes Personenflussführungselement (110a; 11 0b) eine teiltransparente Projektionsfläche (115a,b) zur Darstellung einer darauf optisch projizierbaren Abbildung aufweist und die Passagesteuerungseinrichtung zwischen zumindest zwei verschiedenen Konfigurationen überführbar ist, die sich bezüglich einer Position und/oder Orientierung des bzw. jedes Personenflussführungselements und bezüglich der dadurch bedingten Passagemöglichkeit für Personen unterscheiden;
eine Steuerung (150), die konfiguriert ist, die Passagesteuerungseinrichtung in Abhängigkeit von zumindest einer erfassten Information bezüglich der zumindest einen Person (P), deren Bewegung durch den Passagebereich (125) zu steuern ist, zu veranlassen, eine entsprechend zugeordnete Konfiguration der Passagesteuerungseinrichtung einzunehmen; und
eine Projektionseinrichtung (135) zum Erzeugen einer Abbildung einer Hinweisinformation mittels optischer Projektion auf die jeweilige Projektionsfläche (115a,b) des bzw. jedes Personenflussführungselements.

2. System (100; 500) nach Anspruch 1, wobei:
die Passagesteuerungseinrichtung zumindest zwei Personenflussführungselemente (110a,b) aufweist; und
die Projektionsfläche (115a,b) eines ersten Personenflussführungselements (110b) einen ersten Teilbereich (160a) aufweist, in dem sie für das zum Zwecke der optischen Projektion von der Projektionseinrichtung (135) aussendbare Licht eine höhere Transparenz aufweist als in einem zweiten, verschiedenen Teilbereich (160b) der Projektionsfläche, so dass in zumindest einer der Konfigurationen der Passagesteuerungseinrichtung mittels der Projektion einerseits eine erste Abbildung durch den ersten Teilbereich (160a) hindurch auf die Projektionsfläche (115a,b) eines zweiten, vom ersten Personenflussführungselement (110b) verschiedenen, Personenflussführungselements (110a) und andererseits eine zweite Abbildung auf den zweiten Teilbereich (160b) der Projektionsfläche (115a,b) des ersten Personenflussführungselements (11 0b) erzeugt werden kann.

3. System (100; 500) nach einem der vorausgehenden Ansprüche, wobei die Projektionseinrichtung (135) konfiguriert ist, eine der jeweils aktuell eingenommenen Konfiguration der Passagesteuerungseinrichtung zugeordnete Hinweisinformation mittels optischer Projektion auf die jeweilige Projektionsfläche (115a,b) des bzw. jedes Personenflussführungselements abzubilden.

4. System (100; 500) nach einem der vorausgehenden Ansprüche, wobei das System (100; 500) konfiguriert ist, in zumindest einer der Konfigurationen der Passagesteuerungseinrichtung voneinander unterschiedliche Abbildungen auf zumindest zwei der Personenflussführungselemente (110a,b) zu projizieren.

5. System (100; 500) nach einem der vorausgehenden Ansprüche, wobei:
die Projektionseinrichtung (135) konfiguriert ist, zum Erzeugen der jeweiligen Abbildung polarisiertes Licht auf die Projektionsfläche (115a,b) des bzw. jedes Personenflussführungselements zu strahlen; und
das bzw. zumindest ein Personenflussführungselement (110a; 11 0b) im Bereich seiner Projektionsfläche (115a,b) einen Polarisationsfilter aufweist, sodass diese Projektionsfläche (115a,b) bezüglich dem darauf von der Projektionseinrichtung (135) zum Erzeugen der jeweiligen Abbildung projizierbaren polarisierten Licht eine andere Transparenz aufweist als bezüglich unpolarisiertem Licht.

6. System (100; 500) nach Anspruch 5, wobei das bzw. zumindest ein Personenflussführungselement (110a; 110b) im Bereich seiner Projektionsfläche (115a,b) mit einer Beschichtung versehen ist, die den Polarisationsfilter aufweist.

7. System (100) nach einem der vorausgehenden Ansprüche, wobei das System (100) so konfiguriert ist, dass die jeweilige Projektionsfläche (115a,b) des zumindest einen Personenflussführungselements von der Projektionseinrichtung (135) in allen Konfigurationen der Passagesteuerungseinrichtung beleuchtbar ist, um darauf per Projektion die jeweilige der jeweiligen Konfiguration zugeordnete Abbildung zu erzeugen.

8. System (100; 500) nach einem der vorausgehenden Ansprüche, wobei das System (100; 500) konfiguriert ist, die zu projizierende Information bezüglich ihres Inhalts oder ihrer Darstellung in Abhängigkeit von einer Stellung des Personenflussführungselements bzw. zumindest eines der Personenflussführungselemente (110a,b) anzupassen, während dieses zwischen zwei verschiedenen Konfigurationen der Passagesteuerungseinrichtung überführt wird.

9. System (100; 500) nach Anspruch 8, wobei das System (100; 500) konfiguriert ist, die zu projizierende Information bezüglich ihres Inhalts oder ihrer Darstellung in Abhängigkeit von der Stellung des Personenflussführungselements bzw. zumindest eines der Personenflussführungselemente (110a,b) fließend oder in mehreren aufeinanderfolgenden Stufen anzupassen, während dieses zwischen zwei verschiedenen Konfigurationen der Passagesteuerungseinrichtung überführt wird.

10. System (100; 500) nach einem der vorausgehenden Ansprüche, wobei:
die Passagesteuerungseinrichtung zumindest zwei Personenflussführungselemente (110a,b) aufweist; und
die Projektionseinrichtung (135) konfiguriert ist, eine zu projizierende Hinweisinformation in Form eines Bilds, Zeichens und/oder Texts anteilig auf die jeweiligen Projektionsflächen (115a,b) der zumindest zwei Personenflussführungselemente (110a,b) zu projizieren, so dass das entstehende Abbild der projizierten Information über die verschiedenen Projektionsflächen (115a,b) verteilt erzeugt wird.

11. System (100; 500) nach einem der vorausgehenden Ansprüche, des Weiteren aufweisend eine Sensorik (165) zum zumindest anteiligen bildlichen Erfassen der Person (P) und/oder zum Erfassen zumindest eines biometrischen Merkmals der Person (P).

12. System (100; 500) nach Anspruch 11, wobei die Steuerung (150) konfiguriert ist, die Passagesteuerungseinrichtung in Abhängigkeit von zumindest einem mittels der Sensorik (165) erfassten, zumindest anteiligen Bild oder biometrischen Merkmal der Person (P), deren Bewegung durch den Passagebereich (125) zu steuern ist, zu veranlassen, eine entsprechend zugeordnete der Konfigurationen einzunehmen.

13. System (100; 500) nach Anspruch 11 oder 12, wobei das System (100; 500) konfiguriert ist, in zumindest einer Konfiguration der Passagesteuerungseinrichtung mittels der Projektionseinrichtung (135) als eine dieser Konfiguration zugeordnete Information ein mittels der Sensorik (165) erfasstes zumindest anteiliges Bild (155) oder biometrisches Merkmal der Person (P) auf die jeweilige Projektionsfläche (115a,b) zumindest eines Personenflussführungselements (110a,b) zu projizieren.

14. System (100; 500) nach einem der Ansprüche 11 bis 13, wobei die Sensorik (165) einen Bildsensor mit einer optischen Achse aufweist, der so angeordnet ist, dass die optische Achse durch die Projektionsfläche (115a,b) eines Personenflussführungselements oder in einem Zwischenraum zwischen den jeweiligen Projektionsflächen (115a,b) von zumindest zwei benachbarten Personenflussführungselementen (110a,b) verläuft.

15. System (100; 500) nach Anspruch 14, wobei die optische Achse ein Lot auf die Projektionsfläche (115a,b) des zumindest einen Personenflussführungselements oder auf eine Tangentialfläche zu wenigstens einer der Projektionsflächen (115a,b) der zumindest zwei benachbarten Personenflussführungselementen (110a,b) bildet.

16. System (100; 500) nach Anspruch14 oder 15, wobei das System (100; 500) des Weiteren so konfiguriert ist, dass die der Bildsensor nicht in einem Beleuchtungsfeld (140a,b) der Projektionseinrichtung (135) liegt.

17. System (500) nach Anspruch 16, wobei das System (500) zumindest eine der folgenden Konfigurationen aufweist, um zu bewirken, dass der Bildsensor nicht in dem Beleuchtungsfeld (140a,b) der Projektionseinrichtung (135) liegt:
- der Bildsensor ist mittels zumindest einer optischen Blende (170) gegenüber dem Beleuchtungsfeld abgeschirmt;
- der Bildsensor ist gegenüber der Projektionsfläche, durch die seine optische Achse verläuft, räumlich derart versetzt angeordnet, dass das Personenflussführungselement, zu dem die Projektionsfläche (115a,b) gehört, den Bildsensor gegenüber dem Beleuchtungsfeld abschirmt;
- ein von der Projektionseinrichtung (135) zu projizierendes Bild wird durch das System (100; 500) so definiert oder modifiziert, dass die Strahlungsintensität von solchen Bildanteilen des Bilds, die bei der Projektion auf den Bildsensor treffen bzw. treffen würden, auf null gesetzt oder gegenüber anderen Bildanteilen reduziert wird.

18. System (500) nach einem der vorausgehenden Ansprüche, wobei durch das System (500) eine Wegweiche derart definiert ist, dass:
eine erste Konfiguration der Passagesteuerungseinrichtung einen ersten Weg durch den Passagebereich (125) für die Passage der Person (P) freigibt;
eine zweite, von der ersten Konfiguration verschiedene Konfiguration der Passagesteuerungseinrichtung einen zweiten, vom ersten Weg zumindest abschnittsweise verschiedenen Weg durch den Passagebereich (125) für die Passage der Person (P) freigibt; und
dabei der jeweils andere Weg durch das Personenflussführungselement (110a; 110b) bzw. zumindest eines der Personenflussführungselemente (110a,b) versperrt wird.

19. System (100) nach einem der vorausgehenden Ansprüche, wobei die Projektionseinrichtung (135) konfiguriert ist, die Abbildung der zur projizierenden Hinweisinformation zumindest anteilig als auf einer der Projektionsfläche (115a,b) gegenüberliegenden Seite des jeweiligen Personenflussführungselements dargestelltes Transmissionsbild zu erzeugen.

20. System (500) nach einem der Ansprüche 1 bis 18, wobei die Projektionseinrichtung (135) konfiguriert ist, die Abbildung der zur projizierenden Hinweisinformation zumindest anteilig als auf der Projektionsfläche (115a,b) des jeweiligen Personenflussführungselements dargestelltes Reflektionsbild zu erzeugen.
